# EUROPEAN PATENT SPECIFICATION

(11) **EP 0 289 132 B1**
(45) Date of publication and mention of the grant of the patent: **08.09.1993**
(21) Application number: 88302652.8
(22) Date of filing: 25.03.1988
(51) Int. Cl.: C08F 6/10

(54) **Method of removing solvent from chlorinated resin**
Verfahren zur Entfernung von Lösungsmittel aus chlorierten Harzen
Procédé pour enlever le solvant d'une résine chlorée

(30) Priority: 27.03.1987 JP 73445/87; 31.07.1987 JP 192195/87
(43) Date of publication of application: 02.11.1988
(73) Proprietor: ASAHI DENKA KOGYO KABUSHIKI KAISHA, Arakawa-ku Tokyo 116 (JP)
(72) Inventor: Yoshida, Kageo, Urawa shi, Saitama (JP); Nittani, Osamu, Tokyo (JP); Ito, Toshinobu, Kashima-gun, Ibaraki (JP); Kokura, Makaoto, Saitama (JP); Hirano, Kouzi, Kashiwa-shi, Chiba (JP)
(74) Representative: Taylor, Phillip Kenneth

(56) References cited:
- EP-A- 0 142 894
- EP-A- 0 183 314
- DE-A- 2 649 754
- DE-A- 3 323 940
- Gale G Hoyer, 'Extraction with Supercritical Fluids', Chemtech, July 1985, pp440-448

## Description

This invention relates to a method of removing a solvent remaining in a chlorinated resin. More particularly, the present invention is concerned with a method of removing residual chlorinated organic solvent remaining in a chlorinated polyolefin or chlorinated rubber according to a supercritical extraction or solid-liquid extraction technique.

Chlorinated resins obtained by chlorinating a hydrocarbon resin are widely used to prepare paints, inks, adhesives, etc. Chlorinated resins are produced by chlorinating a hydrocarbon resin in the presence of a solvent. Some of the solvent tends to remain in the formed chlorinated resin. Therefore, there has been a need to remove such solvent.

A conventional method of removing the solvent generally comprises heating the chlorinated resin to thereby evaporate the solvent present in the resin. In this method, it is difficult to decrease the solvent content below 1%. Further, this method has a drawback that heating causes degradation of the resin, thereby giving a product of poor quality. Moreover, a good deal of energy is necessary for heating. Therefore, this conventional method leaves much room for improvement.

In an attempt to obviate the above drawbacks, Japanese Patent Publication No. 24801/1985 proposed a method of removing retained solvent which comprises conducting infrared heating in combination with hot water or hot air heating. This method is the same as the above method in respect of heating and is not sataisfactory from the viewpoints of product degradation and efficiency.

US-A-4049857 and its German counterpart DE-A-2649754 disclose a process for at least partly removing residual chlorinated hydrocarbon solvent from a chlorinated polymer obtained by precipitation from the said solvent, which comprises treatment of the chlorinated polymer with the vapor of an aliphatic halo-hydrocarbon having a boiling point below that of the chlorinated hydrocarbon to be removed, at a temperature 10° above the boiling point of the halo-hydrocarbon employed in the treatment.

It is known that a fluid in a supercritical state is capable of dissolving a wide variety of materials therein. The supercritical extraction technique based on this knowledge has been studied mainly for use in the field of extraction of components from drugs, foods and cosmetics.

DE-A-3323940 discloses a purification press for polymers by reduction of the content of low-molecular weight products through treatment of the polymers with a gas in a supercritical state as extraction agent.

EP-A-0142894 describes a process for purifying ethylene-alkene-diene rubbers by extraction with an extractant chosen from substances with a critical temperature below 435°K at a temperature above the critical temperature of the extractant and a pressure above the critical pressure of the extractant.

EP-A-0183314 describes a process for purifying a copolymer containing acrylonitrile groups, by treating the copolymer per kg impurities of the copolymer, with at least 1 Nm³ (NPT) of an extractant chosen from substances the critical temperature of which is lower than 435K, at a temperature higher than 0.9 time the critical temperature of the extractant and a pressure higher than 0.9 time the critical pressure of the extractant.

In Chemtech, July 1985 an article by Gale CT. Hoyer describes pressure-temperature phase diagrams for pure components involving supercritial fluid regions and solubility curves for binary systems involving a supercritical fluid such as solubility of naphthalene in carbon dioxide above the critical temperature of carbon dioxide.

Chlorinated resins from which extraction of residual solvent is desirable include chlorinated polyolefins and rubbers obtained by chlorinating a polyolefin, such as polyethylene, polypropylene, and polyethylene-polypropylene copolymer, natural rubber, synthetic rubber, polyisoprene, polybutadiene, ethylene-vinyl acetate copolymer, and a mixture thereof. The degree of chlorination of these polymers may be low or high. The chlorinated resin may contain a plasticizer, a stabilizer, and other auxiliaries.

Examples of the solvents employed in the production of chlorinated resins are chlorinated hydrocarbon solvents, such as carbon tetrachloride, chloroform, methylene chloride, chloroethane, dichloroethane, trichloroethane, tetrachloroethane, and mixtures thereof.

Chlorinated resins as indicated above frequently contain auxiliary materials which are essential to the properties desired of the chlorinated resin. Any treatment of such resins which had the effect of reducing the content of such auxiliaries, especially plasticiser, would be undesirable. It has surprisingly been found that despite the known solubilizing effect of fluids in a supercritical state on a wide variety of materials, such fluids can be used to extract residual solvent from chlorinated resins without materially affecting the presence of the necessary auxiliaries also present and therefore retaining the essential characteristics of the chlorinated resin. This is particularly so for resins containing 1 to 10% by weight of plasticiser.

According to the present invention there is provided a method of removing residual chlorinated hydrocarbon solvent from a resin by contacting said hydrocarbon solvent-containing resin with a fluid carbon dioxide in a supercritical state, characterised in that the resin is a chlorinated polyolefin or a chlorinated rubber and the solvent was used in the production of said chlorinated polyolefin or said chlorinated rubber and in that the said chlorinated polyolefin or said chlorinated rubber also contains from 1 to 10 per cent by weight of a plasticiser for said chlorinated polyolefin or for said chlorinated rubber.

The carbon dioxide to be used in the present invention has a solubility parameter which is close to that of the solvents to be extracted, such as carbon tetrachloride, and to that of the chlorinated resins. Further, advantageously, it is non-toxic, non-flammable, and non-combustible. Moreover, the carbon dioxide can be readily separated from the extracted solvent.

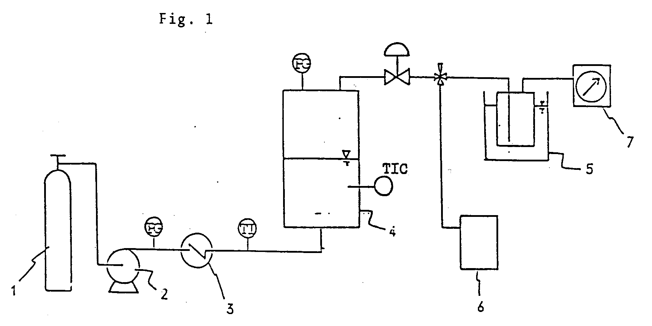

The solvent extraction method used in the method of the present invention will be further described with reference to a method in which a chlorinated rubber is employed as a chlorinated resin and carbon tetrachloride is used as a solvent, and by reference to the accompanying drawing which is a flow chart illustrating an embodiment of the present invention.

Carbon dioxide in a supercritial or liquid state is fed from a cylinder 1 via a preheater 3 into an extraction tank 4 by means of a pump 2. In the extraction tank 4, a powdery chlorinated rubber from which the solvent is to be removed is accommodated in advance. In the extraction tank 4, the carbon dioxide in a supercritial or liquid state as fed and the powdery chlorinated rubber are mixed together. As a result, the carbon tetrachloride present as residual solvent in the chlorinated rubber is extracted by the carbon dioxide. The carbon dioxide containing extracted carbon tetrachloride is fed to a trap 5,from which the carbon tetrachloride is recovered, with the carbon dioxide being discharged into the air. The carbon dioxide may be recovered and re-utilized in place of discharge thereof into the air. Numerals 6 and 7 designate a gas chromatograph and a gas meter, respectively. In this embodiment, the recovery of carbon tetrachloride is conducted by the use of a cooling trap. However, alternatively, the recovery can be conducted by the use of an active carbon column capable of adsorbing carbon tetrachloride.

The temperature and pressure for extraction vary widely depending on the types of the resin and solvent. However, when a supercritical extraction is conducted by making use of carbon dioxide in a Supercritical state, it is generally preferred that the temperature range from 30 to 120°C, and the pressure range from 75 to 250 kg/cm². On the other hand, when a solid-liquid extraction is conducted by making use of carbon dioxide in a liquid state, it is preferred that the temperature range from -40°C to less than 30°C, and the pressure range from 5 to 250 kg/cm².

According to the present invention, the solvent content of a chlorinated resin can be efficiently reduced without causing degradation due to heating of the resin, thereby obtaining a high-quality chlorinated resin.

The method of extraction of the present invention will now be described in more detail with reference to the following Extractions which are for reference only and are not to be regarded as embodiments of the invention claimed.

### Extraction 1 (chlorinated rubber)

1 kg of polyisoprene rubber (average molecular weight: 840 x 10³) was dissolved in 25 kg of carbon tetrachloride and subjected to molecular weight regulation treatment with the air. Then, the solution was heated to 70°C, and the oxygen dissolved in the solution was purged with a nitrogen gas. 5 g of azobisisobutyronitrile as a chlorinating catalyst was added to the solution and agitated well. Next, a chlorine gas was introduced into the mixture for 12 hr, thereby obtaining a chlorinated polyisoprene having a chlorine content of 66 %. The reaction mixture was slowly put in hot water while vigorously stirring, thereby obtaining white powder. The white powder thus obtained was dehydrated by centrifugation and dried at 60°C for 24 hr, thereby obtaining a chlorinated polyisoprene containing 8.0 % of carbon tetrachloride.

50 g of this chlorinated rubber was put into an extraction tank, and carbon dioxide in a supercritical state was introduced thereinto under the conditions of temperature, pressure, flow rate, and time as shown in Table 1. The carbon tetrachloride (hereinafter referred to as "CTC") content of the chlorinated rubber after the supercritical extraction is shown in Table 1 (see ① - ⑤ and ⑦ - 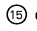 of Table 1).

### Extraction 2 (chlorinated polyethylene)

The same procedures as those of Extraction 1 were repeated, except that polyethylene wax (average molecular weight: 5000) was used as the starting material, thereby obtaining chlorinated polyethylene having a chlorine content of 67 % and containing 6.5 % of carbon tetrachloride. The CTC content of the chlorinated polyethylene after the supercritical extraction conducted under the same conditions as those of Extraction 1 is shown in Table 1 (see ⑥ and 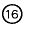 of Table 1).

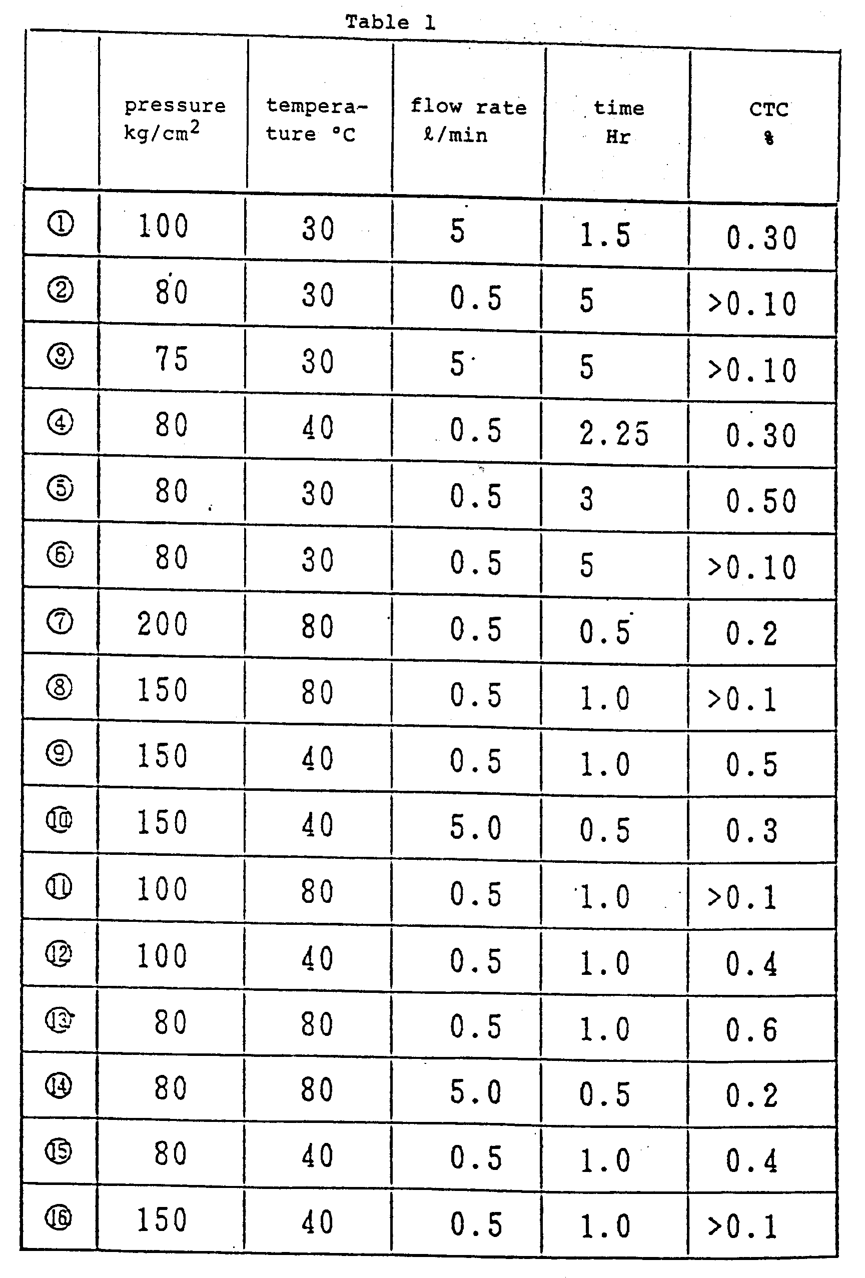

The color of the above-mentioned chlorinated rubber before solvent removal was 1 to 2 on the Gardner scale. The color of the chlorinated rubber after the supercritical extraction treatment was also 1 to 2 on the Gardner scale. There was no difference between them.

By contrast, when the solvent removal from the chlorinated rubber was conducted by the heating method, heating at 120°C for 1 to 2 hr caused the rubber to have a CTC content of 4 to 6 % and a Gardner scale color of 4 to 5 when the rubber did not contain any plasticizer and caused the rubber to have a CTC content of 1 to 2 % and a Gardner scale color of 7 to 9 when the rubber contained a plasticizer.

With respect to the chlorinated polyethylene, the colour of the polymer before solvent, removal was 1 or less on the Gardner scale, and that of the polymer after supercritical extraction was also 1 or less without any change. By contrast, the polymer after the above-mentioned heating treatment had a CTC content of 2 to 3 % and a Gardner scale of 2 to 3.

### Extraction 3 (chlorinated rubber)

50 g of the chlorinated rubber obtained in Extraction 1 was put into an extraction tank, and liquid carbon dioxide was introduced thereinto under the conditions of temperature, pressure, flow rate, and time as shown in Table 2. The carbon tetrachloride (CTC) content of the chlorinated rubber after the solid-liquid extraction is shown in Table 2 ( ① - ⑨ of Table 2).

### Extraction 4 (chlorinated polyethylene)

The same procedures as those of Extraction 3 were repeated, except that polyethylene wax (average molecular weight: 5000) was used as the starting material), thereby obtaining chlorinated polyethylene having a chlorine content of 67 % and containing 6.5 % of carbon tetrachloride. The CTC content of the chlorinated polyethylene after the solid-liquid extraction conducted under the same conditions as those of Extraction 3 is shown in Table 2 (see 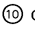 of Table 2).

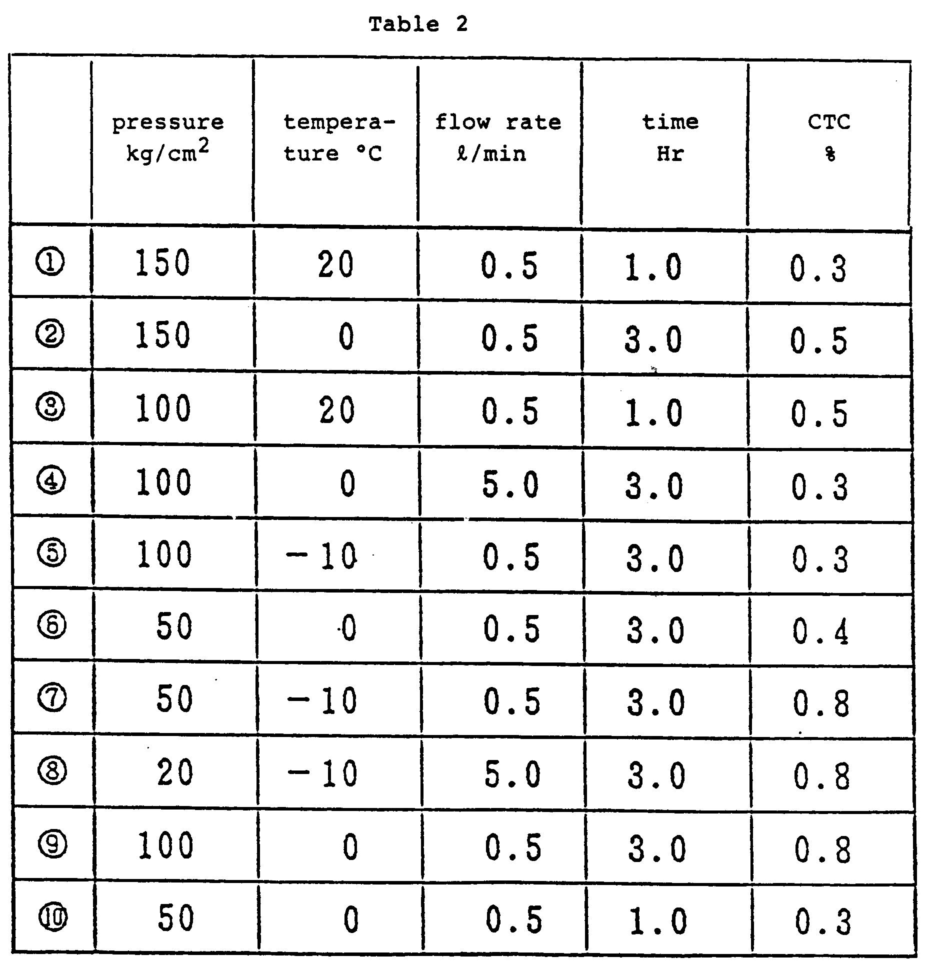

The color of the above-mentioned chlorinated rubber before solvent removal was 1 to 2 on the Gardner scale. The color of the chlorinated rubber after the solid-liquid extraction with carbon dioxide was also 1 to 2 on the Gardner scale. There was no difference between them.

By contrast, when the solvent removal from the same chlorinated rubber conducted by the heating method, heating at 120°C for 1 to 2 hr caused the rubber to have a CTC content of 4 to 6 % and a Gardner scale of 4 to 5 when the rubber did not contain any plasticizer and caused the rubber to have a CTC content of 1 to 2 % and a Gardner scale color of 7 to 9 when the rubber contained a plasticizer.

With respect to the chlorinated polyethylene as well, the color of the polymer before solvent removal was 1 or less on the Gardner scale, and that of the polymer after solid-liquid extraction was also 1 or less without any change. By contrast, the polymer after the above-mentioned heating treatment had a CTC content of 2 to 3 % and a Gardner scale of 2 to 3.

According to the present invention, the residual content of a chlorinated hydrocarbon solvent remaining in a chlorinated polyolefin or chlorinated rubber containing 1 to 10 per cent of a plasticiser for said chlorinated polyolefin or for said chlorinated rubber can be readily reduced to 1% or less, preferably 0.5 % or less. The present invention is carried out at temperatures which do not cause degradation of the chlorinated resin. Therefore, a high-quality chlorinated resin can be produced efficiently.

## Claims

1. A method of removing residual chlorinated hydrocarbon solvent from a resin by contacting said hydrocarbon solvent-containing resin with a fluid carbon dioxide in a supercritical state, characterised in that the resin is a chlorinated polyolefin or a chlorinated rubber and the solvent was used in the production of said chlorinated polyolefin or said chlorinated rubber and in that the said chlorinated polyolefin or said chlorinated rubber also contains from 1 to 10 per cent by weight of a plasticiser for said chlorinated polyolefin or for said chlorinated rubber.

2. A method according to claim 1, characterised in that said chlorinated hydrocarbon solvent is carbon tetrachloride.

## Patentansprüche

1. Verfahren zum Entfernen eines Restes eines chlorierten Kohlenwasserstofflösungsmittels aus einem Harz durch Zusammenbringen des kohlenwasserstofflösungsmittelhaltigen Harzes mit flüssigem Kohlendioxid in überkritischem Zustand, dadurch gekennzeichnet, daß das Harz ein chloriertes Polyolefin oder ein chlorierter Gummi ist und das Lösungsmittel bei der Herstellung des chlorierten Polyolefins oder des chlorierten Gummis verwendet wurde, und dadurch, daß das chlorierte Polyolefin oder der chlorierte Gummi ferner 1 bis 10 Gewichtsprozent eines Weichmachers für das chlorierte Polyolefin oder für den chlorierten Gummi enthält.

2. Verfahren gemäß Anspruch 1, dadurch gekennzeichnet, daß das chlorierte Kohlenwasserstofflösungsmittel Tetrachlorkohlenstoff ist.

## Revendications

1. Procédé pour éliminer d'une résine un solvant hydrocarburé chloré résiduel en mettant au contact la résine contenant ledit solvant hydrocarburé avec un anhydride carbonique fluide à l'état supercritique, caractérisé par le fait que la résine est une polyoléfine chlorée ou un caoutchouc chloré et le solvant était utilisé dans la production de ladite polyoléfine chlorée ou ledit caoutchouc chloré et que ladite polyoléfine chlorée ou ledit caoutchouc chloré contient aussi de 1 à 10 % en poids d'un plastifiant pour ladite polyoléfine chlorée ou par ledit caoutchouc chloré.

2. Procédé selon la revendication 1, caractérisé par le fait que ledit solvant hydrocarburé chloré est le tétrachlorure de carbone.
